(19) **Europäisches Patentamt**
**European Patent Office**
**Office européen des brevets**

(11) **EP 4 692 193 A1**

(12) **EUROPEAN PATENT APPLICATION**
published in accordance with Art. 153(4) EPC

(43) Date of publication:
**11.02.2026 Bulletin 2026/07**

(21) Application number: **24780869.4**

(22) Date of filing: **29.03.2024**

(51) International Patent Classification (IPC):
***C08J 11/08*** (2006.01)   ***C08J 3/14*** (2006.01)

(52) Cooperative Patent Classification (CPC):
**C08J 3/14; C08J 11/08;** Y02W 30/62

(86) International application number:
**PCT/JP2024/013205**

(87) International publication number:
**WO 2024/204775 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053771
30.11.2023 JP 2023202883**

(71) Applicant: **Mitsubishi Chemical Corporation
Tokyo 100-8251 (JP)**

(72) Inventors:
• **KASHIMA, Ayaka
  Tokyo 100-8251 (JP)**
• **YOKOGI, Masashi
  Tokyo 100-8251 (JP)**

(74) Representative: **Vossius & Partner
Patentanwälte Rechtsanwälte mbB
Siebertstraße 3
81675 München (DE)**

(54) **METHOD FOR PRODUCING RECYCLED POLYBUTYLENE TEREPHTHALATE AND METHOD FOR PRODUCING POLYBUTYLENE TEREPHTHALATE COMPOSITE MATERIAL**

(57)   Provided is a method for producing a recycled polybutylene terephthalate (PBT) with practically acceptable quality and low environmental load. A method for producing a recycled PBT including a step (A) of dissolving a PBT composite material in a solvent (S) containing a phenolic solvent to obtain a solution containing PBT dissolved therein, a step (B) of removing an insoluble matter from the solution containing PBT dissolved therein to obtain a liquid component (L) containing PBT dissolved therein, a step (C) of mixing the liquid component (L) and a solvent (P) capable of precipitating PBT by being mixed with the liquid component (L) to precipitate PBT, thereby obtaining a slurry, and then separating the slurry into solid and liquid to obtain a solid PBT, and a step (D) of drying the solid PBT to obtain a recycled PBT.

EP 4 692 193 A1

## Description

Technical Field

The present invention relates to a method for producing a recycled polybutylene terephthalate and a method for producing a polybutylene terephthalate composite material.

Background Art

Polybutylene terephthalate (hereinafter referred to as "PBT" in some cases) is excellent in terms of mechanical properties, heat resistance, chemical resistance, and electrical properties, has prominent colorability, and is easy to mold and inexpensive. Therefore, polybutylene terephthalate is used as a material in the electrical and electronic field, in the automotive field, for highly functional films and the like, and demand therefor is increasing.
From the viewpoint of environmental protection in recent years, the use of plastic has been shunned, and there has been a demand for urgent establishment of recycling techniques, but no progress has been made in PBT recycling. This is because, rather than being used alone, PBT is often composited with a glass fiber to dramatically improve strength or heat resistance by compositing a variety of fillers therewith or used as a polybutylene terephthalate composite material (PBT composite material) by being composited with an AS resin, an ABS resin, a PS resin, a PC resin, a PET resin, or the like to improve warpage, dimensional accuracy, coatability, or impact resistance.

Citation List

Patent Literature

Patent Literature 1: Japanese Patent Laid-Open No. 2023-75033

Summary of Invention

Technical Problem

When an attempt is made to perform material recycling on a PBT composite material, since the PBT composite material contains a variety of fillers or additives and other resins, it is difficult to remove these from the PBT composite material, and it is difficult to obtain a recycled PBT containing no impurities. In addition, when an attempt is made to knead PBT obtained by material recycling again, cracking of an incorporated filler or the like may occur, leading to decreased strength. Furthermore, during material recycling, repeated recycling may cause a problem of decreased molecular weight of PBT and decreased mechanical strength.
As a method for recycling PBT, chemical recycling has been also proposed (Patent Literature 1). This has been established as a recycling method, but the literature aims at process scrap, etc., made of PBT alone, and mentions nothing about PBT composite materials containing a different resin. In addition, the chemical recycling involves many processes and requires a large amount of heat energy for depolymerization into monomers and repolymerization, resulting in a problem of large environmental load and increased production cost. It is estimated that obtaining recycled PBT from a PBT composite material by the chemical recycling is difficult at the moment.
Under such a circumstance, there is a demand for collecting only PBT from PBT composite materials containing PBT. The present invention has been made in consideration of the above-described circumstance, and an object of the present invention is to provide a method for producing a recycled PBT that makes it possible to obtain recycled PBT having a quality with no practical problems by a method with a small environmental load that does not require many processes, such as depolymerization or repolymerization, or a large amount of heat energy, unlike in the chemical recycling. In addition, another object of the present invention is to provide a method for producing a PBT composite material using the obtained recycled PBT.

Solution to Problem

As a result of conducting intensive studies to achieve the above-described objects, the present inventors found that when PBT is dissolved in a solvent containing a phenolic solvent (solvent (S)), a fiber or resin other than PBT and an impurity, such as a metal impurity, are removed by filtration, and the filtrate is brought into contact with a solvent in which PBT is insoluble (solvent (P)) to precipitate PBT, it is possible to collect a recycled PBT having a quality with no practical problems without decomposing PBT up to monomers, and completed the following invention of a method for producing a recycled PBT.

That is, the present invention relates to the following inventions.

<1> A method for producing a recycled polybutylene terephthalate from a polybutylene terephthalate composite material, the method comprising the following step (A) to step (D):

step (A): a step of dissolving a polybutylene terephthalate composite material in a solvent (S) containing a phenolic solvent to obtain a solution containing polybutylene terephthalate dissolved therein;

step (B): a step of removing an insoluble matter from the solution containing polybutylene terephthalate dissolved therein to obtain a liquid component (L) containing polybutylene terephthalate dissolved therein;

step (C): a step of mixing the liquid component (L) and a solvent (P) capable of precipitating polybutylene terephthalate by being mixed with the liquid component (L) to precipitate polybutylene terephthalate, thereby obtaining a slurry, and then separating the slurry into solid and liquid to obtain a solid polybutylene terephthalate; and

step (D): a step of drying the solid polybutylene terephthalate to obtain a recycled polybutylene terephthalate.

<2> The method for producing a recycled polybutylene terephthalate according to <1>, comprising, before the step (B), a step (X1) of bringing the solution containing polybutylene terephthalate dissolved therein and an aggregating agent into contact with each other.

<3> The method for producing a recycled polybutylene terephthalate according to <1> or <2>, comprising, before the step (B), a step (X2) of bringing the solution containing polybutylene terephthalate dissolved therein and a filter aid into contact with each other.

<4> The method for producing a recycled polybutylene terephthalate according to any of <1> to <3>, wherein a temperature of the solvent (S) in the step (A) is 45°C or higher and 150°C or lower.

<5> The method for producing a recycled polybutylene terephthalate according to any of <1> to <4>, wherein in the step (C), the slurry is obtained at 0°C or higher and 80°C or lower.

<6> The method for producing a recycled polybutylene terephthalate according to any of <1> to <5>, wherein the solvent (P) in the step (C) is one or more selected from the group consisting of an aromatic hydrocarbon-based solvent, an aliphatic hydrocarbon-based solvents, a ketone-based solvent, an aldehyde-based solvent, an alcohol-based solvent, an ether-based solvent, and water.

<7> The method for producing a recycled polybutylene terephthalate according to <6>, wherein the solvent (P) in the step (C) is one or more selected from the group consisting of acetone, toluene, methanol, ethanol, isopropyl alcohol, and water.

<8> The method for producing a recycled polybutylene terephthalate according to <2>, wherein the aggregating agent in the step (X1) is one or more selected from the group consisting of inorganic salts other than alkali metal salts and alkaline earth metal salts and polymer compounds.

<9> The method for producing a recycled polybutylene terephthalate according to <2>, wherein the aggregating agent in the step (X1) is composed of an inorganic salt other than alkali metal salts and alkaline earth metal salts.

<10> The method for producing a recycled polybutylene terephthalate according to <8> or <9>, wherein the inorganic salt other than alkali metal salts and alkaline earth metal salts is one or more selected from the group consisting of iron (III) chloride, iron (II) sulfate, iron (III) sulfate, aluminum sulfate, and aluminum chloride.

<11> The method for producing a recycled polybutylene terephthalate according to <8>, wherein the solution containing polybutylene terephthalate dissolved therein is brought into contact with the aggregating agent composed of the inorganic salt other than alkali metal salts and alkaline earth metal salts, and is then brought into contact with the aggregating agent composed of the polymer compound.

<12> The method for producing a recycled polybutylene terephthalate according to <8>, wherein the polymer compound is one or more selected from the group consisting of polyacrylamide and polyethylene oxide.

<13> The method for producing a recycled polybutylene terephthalate according to <3>, wherein the filter aid in the step (X2) is one or more selected from the group consisting of activated carbon, activated clay, celite, silica gel, a synthetic adsorbent, bentonite, alumina, and zeolite.

<14> The method for producing a recycled polybutylene terephthalate according to any of <1> to <13>, wherein the solvent (S) contains an aromatic hydrocarbon-based solvent and/or an aliphatic hydrocarbon-based solvent.

<15> The method for producing a recycled polybutylene terephthalate according to <14>, wherein a total content of the aromatic hydrocarbon-based solvent and the aliphatic hydrocarbon-based solvent in the solvent (S) is 20 mass% or more.

<16> The method for producing a recycled polybutylene terephthalate according to any of <1> to <15>, wherein a content of polybutylene terephthalate in the polybutylene terephthalate composite material is 10 mass% or more.

<17> The method for producing a recycled polybutylene terephthalate according to any of <1> to <16>, wherein the polybutylene terephthalate composite material contains a further component other than polybutylene terephthalate, and the further component is one or more selected from the group consisting of inorganic compounds, organic low-molecular-weight compounds, fibers other than polybutylene terephthalate, and resins other than polybutylene terephthalate.

<18> The method for producing a recycled polybutylene terephthalate according to any of <1> to <17>, wherein the polybutylene terephthalate composite material is an injection molded product containing polybutylene terephthalate.

<19> The method for producing a recycled polybutylene terephthalate according to any of <1> to <18>, wherein the recycled polybutylene terephthalate has an intrinsic viscosity of 0.6 dL/g or higher and 1.5 dL/g or lower.

<20> A material-recycled polybutylene terephthalate, having an intrinsic viscosity of 0.6 dL/g or higher and 1.5 dL/g or lower.

<21> A method for producing a polybutylene terephthalate composite material, comprising: a step of producing a recycled polybutylene terephthalate by the method for producing a recycled polybutylene terephthalate according to any of <1> to <19>; and a step of producing a polybutylene terephthalate composite material using the obtained recycled polybutylene terephthalate.

Advantageous Effects of Invention

According to the present invention, provided is a method for producing a recycled PBT that makes it possible to obtain a recycled PBT having a quality with no practical problems by a method with a small environmental load that involves no chemical decomposition and that does not require many processes or a large amount of heat energy.

In addition, a method for producing a PBT composite material in which a PBT composite material is produced using the obtained recycled PBT.

Description of Embodiments

Hereinafter, an embodiment of the present invention will be described, but the following description of a configuration condition is simply an example (typical example) of the embodiment of the present invention, and the present invention is not limited to the following contents unless the gist of the present invention is changed. In the case of using "to" to express a numerical range in the present specification, the expression is used to include numerical values or physical property values before and after the "to."

<Method for producing recycled polybutylene terephthalate (PBT)>

The present invention relates to a method for producing a recycled polybutylene terephthalate (hereinafter referred to as "the method for producing a recycled PBT of the present invention"), that is a method for producing a recycled PBT from a PBT composite material, the method including the following step (A) to step (D);

step (A): a step of dissolving a PBT composite material in a solvent (S) containing a phenolic solvent to obtain a solution containing PBT dissolved therein (hereinafter referred to as "PBT solution" in some cases),
step (B): a step of removing an insoluble matter from the solution containing PBT dissolved therein to obtain a liquid component (L) containing PBT dissolved therein,
step (C): a step of mixing the liquid component (L) and a solvent (P) capable of precipitating polybutylene terephthalate by being mixed with the liquid component (L) to precipitate PBT, thereby obtaining a slurry, and then separating the slurry into solid and liquid to obtain a solid PBT, and
step (D): a step of drying the solid PBT to obtain a recycled PBT.

The method for producing a recycled PBT of the present invention is a method for producing a recycled PBT by material recycling. That is, in the method for producing a recycled PBT of the present invention, a PBT composite material is not chemically decomposed and is recycled as PBT again after resins or fillers other than PBT and additives are removed.

One characteristic of the method for producing a recycled PBT of the present invention is that in the step (A), a solvent (S) containing a phenolic solvent is selected as the solvent that dissolves PBT, and PBT is dissolved in this solvent (S) to obtain a PBT solution, then, in the step (B), an insoluble matter, such as a resin or filler other than PBT and an additive, are removed, and then, in the step (C), PBT is reprecipitated, thereby obtaining a PBT precipitate. The present inventors found that when the solvent (S) containing a phenolic solvent is used, it is possible to dissolve PBT in a PBT composite material under mild conditions, but a resin or filler other than PBT, an additive, and the like do not dissolve therein, and it is thus possible to remove the majority of the components other than PBT. When the method is configured as described above, it is possible to obtain a recycled PBT with no practical problems even when a PBT composite material is used as a recycling raw material.

Hereinafter, each step will be described.

[Step (A)]

The step (A) is a step of dissolving a PBT composite material in the solvent (S) containing a phenolic solvent to obtain a solution containing PBT dissolved therein (PBT solution).

<PBT composite material>

The PBT composite material that is used in the present invention is a material containing PBT and a further component other than PBT and is a post-consumer material and/or a pre-consumer material of a PBT resin composition. The post-consumer material is generally a used PBT resin composition after being incorporated into a product as a molded body or being used as an exterior by a consumer indoors or outdoors. Specific examples thereof include products, such as automotive parts, aircraft parts, electrical and electronic parts, and household appliances. In addition, examples of the pre-consumer material include purged resins generated during polymerization or compounding, PBT resins or compositions thereof that failed to meet the quality standards of existing products, and the like.

Products containing PBT are produced by, for example, injection molding, and injection molded products containing PBT can be used as the PBT composite material.

(Further component other than PBT)

The further component other than PBT that is contained in the PBT composite material is an impurity that is removed in any of the steps of the method for producing a recycled PBT of the present invention.

The further component other than PBT is a compound that is used as an additive at the time of producing a variety of products, a resin other than PBT, or the like. For example, as the PBT composite material, it is possible to use a composite material containing PBT and a further component that is one or more selected from the group consisting of organic low-molecular-weight compounds, inorganic compounds, fibers other than PBT, and resins other than PBT. The further component can be removed by the method for producing a recycled PBT of the present invention, and PBT from which the further component has been removed can be obtained as a recycled PBT. Examples of the organic low-molecular-weight compounds include compounds that are used as colorants, antistatic agents, flame retardants, surfactants, antioxidants, lightfast agents, and the like, which normally have a molecular weight of 2000 or less. Examples of the inorganic compounds include glass beads, mica, talc, calcium carbonate, titanium oxide, carbon black, and the like, which are added to prevent the warp deformation of PBT or as colorants. Examples of the fibers other than PBT include glass fibers, carbon fibers, and the like, which are added to improve the strength, thermal conductivity, linear expansion coefficient, or electrical properties of PBT. Examples of the resins other than PBT include ABS resin, AS resin, polystyrene resin (PS), polyphenylene oxide (PPO), polycarbonate (PC), polyethylene terephthalate (PET), and the like.

The content of PBT in the PBT composite material is not particularly limited, but a material containing 10 mass% or more of PBT in the PBT composite material is preferable, a material containing 30 mass% or more of PBT is more preferable, and a material containing 50 mass% or more of PBT is still more preferable. In addition, as the PBT composite material, one material may be used or two or more materials may be used.

In the method for producing a recycled PBT of the present invention, a resin other than PBT that is contained in the PBT composite material can be efficiently removed. Therefore, even to materials containing a different resin, it is more efficient to apply the method for producing a recycled PBT of the present invention.

The PBT composite material that is used in the step (A) may be used without changing the shape of a resin composition as a post-consumer material or a pre-consumer material, but may also be used after being appropriately divided into an appropriate size by cutting, crushing, pulverizing, or the like. The dividing method of cutting, crushing, pulverizing, or the like is not particularly limited, and it is possible to use cutting using a cutting tool; fusion in which the PBT composite material is cut using gas, plasma, laser, or the like; breaking; shredding using a shredder; coarse crushing in which the PBT composite material is crushed to 20 cm or less using a jaw crusher or a rotary crusher; medium crushing in which the PBT composite material is crushed to 1 cm or less using a rotary crusher, a cone crusher, or a mill; pulverization in which the PBT composite material is crushed to 1 mm or less using a mill. These methods may be performed singly or a plurality of methods may be performed in combination.

When the shape of the PBT composite material is too large, the dissolution time becomes long, which is not preferable. Therefore, it is preferable to use a pulverized body obtained by pulverizing the PBT composite material as a raw material. The pulverized body of the PBT composite material preferably has a shape of 50 mm or smaller, more preferably has a shape of 30 mm or smaller, and more preferably has a shape of 10 mm or smaller. On the other hand, when the shape is too small, there is a concern that the PBT composite material may swirl as dust when being injected into a device, and the shape is preferably 3 mm or larger and more preferably 5 mm or larger.

"50 mm or smaller" means that the pulverized body passes through a sieve having a nominal opening size of 50 mm regulated by JIS-Z-8801-1 (2019), "30 mm or smaller" means that the pulverized body passes through a sieve having the same nominal opening size of 30 mm, and "10 mm or smaller" means that the pulverized body passes through a sieve having the same nominal opening size of 10 mm. In addition, "3 mm or larger" means that the pulverized body does not pass through a sieve having the same nominal opening size of 3 mm, and "5 mm or larger" means that the pulverized body does not pass through a sieve having the same nominal opening size of 5 mm.

[Solvent (S)]

The solvent (S) that is used to dissolve the PBT composite material in the step (A) is not particularly limited as long as the solvent is capable of dissolving PBT and contains a phenolic solvent. Examples of the phenolic solvent include phenol, cresol, xylenol, ethylphenol, propylphenol, butylphenol, methoxyphenol, ethoxyphenol, propoxyphenol, butoxyphenol, benzylphenol, phenylphenol, chlorophenol, dichlorophenol, chloromethylphenol, and the like. One or more of these solvents may be selected. The rate of the phenolic solvent in the solvent (S) may be an arbitrary rate as long as PBT dissolves at the rate, but the rate of those in total in the solvent (S) is preferably contains 30 mass% or more, more preferably 35 mass% or more, and still more preferably 40 mass% or more.

The solvent (S) may contain a solvent other than the phenolic solvent, and specific examples thereof include aromatic hydrocarbon-based solvents such as toluene and xylene; aliphatic hydrocarbon-based solvents such as hexane, heptane, hexene, and cyclohexane; tetrahydrofuran (THF); acetonitrile; dimethyl carbonate; hexafluoroisopropyl alcohol; water; and the like. In the solvent (S), these solvents can be used in an appropriate combination such that PBT dissolves at the dissolution temperature.

Particularly, the solvent (S) preferably contains an aromatic hydrocarbon-based solvent and/or an aliphatic hydrocarbon-based solvent. The total content of the aromatic hydrocarbon-based solvent and the aliphatic hydrocarbon-based solvent in the solvent (S) is preferably 20 mass% or more and more preferably 30 mass% or more. When the solvent (S) contains a total of 20 mass% or more of the aromatic hydrocarbon-based solvent and the aliphatic hydrocarbon-based solvent, it is possible to reduce the amount of the phenolic solvent remaining in an obtained recycled PBT. When a large amount of the phenolic solvent remains in the recycled PBT, the phenolic solvent is oxidized due to heat in a drying step, and a coloring component is generated. As a result, crystals become yellowish, and a molded product for which the yellowish crystals are used also becomes yellow. In addition, the phenolic solvent gasifies during molding, and the molding may become poor.

The amount of the solvent (S) is preferably 200 mass% or more, more preferably 300 mass% or more, and still more preferably 500 mass% or more relative to the mass of the PBT composite material. In a case where the rate of the solvent (S) is small, the viscosity of the solution becomes extremely high, and stirring or dissolution become difficult, or at the time filtration, the filtration speed decreases, and a filtrate adheres to a filter medium, which creates a concern of a decrease in the yield. In addition, the amount of the solvent (S) is preferably 5000 mass% or less, more preferably 4000 mass% or less, and still more preferably 3000 mass% or less relative to the mass of the PBT composite material. In a case where the rate of the solvent (S) is large, the PBT solubility becomes high, the amount of PBT that remains dissolved and is not precipitated even when the solvent (P) is added in the step (C) becomes large, and consequently, there is a concern that the yield may be decreased. For example, the amount of the solvent (S) can be set to 200 mass% to 5000 mass%, 300 mass% to 4000 mass%, or 500 mass% to 3000 mass% relative to the mass of the PBT composite material.

(Dissolution temperature)

When the PBT composite material is dissolved in the solvent (S), it is preferable to control the temperature (the temperature of the solution in a dissolution tank). In the case of not controlling the temperature, the dissolution time becomes nonuniform or an undissolved component is generated at the time of sending the solution to the next step. The temperature is preferably equal to or lower than the boiling point of the solvent (S). When the temperature is higher than the boiling point of the solvent (S), a condenser is required in the dissolution tank, and the process becomes complicated. The specific temperature of the solvent (S) (the temperature of the solution in the dissolution tank) is preferably 45°C or higher, more preferably 50°C or higher, and still more preferably 55°C or higher. In a case where the temperature is too low, the PBT solubility decreases, and the dissolution takes a long time. In addition, at the time of sending the solution to the next step, a long time is taken to send the solution, or at the time of filtration, there is a case where a large load is applied during the filtration. In addition, the upper limit is preferably 150°C or lower, more preferably 140°C or lower, more preferably 130°C or lower, and still more preferably 120°C or lower. In a case where the temperature is too high, there is a concern that PBT may deteriorate due to heat. The dissolution temperature can be set to, for example, 45°C to 150°C, 45°C to 150°C, 50°C to 130°C, or 55°C to 120°C.

(Dissolution time)

The dissolution time is preferably 20 minutes or longer, more preferably 40 minutes or longer, and still more preferably one hour or longer. In addition, the dissolution time is preferably five hours or shorter, more preferably four hours or shorter, and still more preferably three hours or shorter. When the dissolution time is too short, the amount of the undissolved component increases, and there is a concern that the yield may decrease or blocking or the like may be caused in the process. In a case where the dissolution time is too long, there is a possibility that the decomposition or coloring of a polymer may be caused. The dissolution time can be set to, for example, 20 minutes to five hours, 40 minutes to four hours, or one hour to three hours.

In addition, as long as PBT is not precipitated, a PBT solution may be prepared by dissolving PBT in the solvent (S) and then further mixing a solvent therewith. In order to improve the filterability or the like of the PBT solution, a solvent other than the phenolic solvent may be mixed after the PBT is dissolved. For example, after PBT is dissolved in the phenolic solvent, a solvent other than the phenolic solvent, such as an aromatic hydrocarbon-based solvent, may be mixed. The amount of the solvent used, which is added after the dissolution of PBT, is not limited as long as PBT is not precipitated, but is preferably 10 mass% or more and more preferably 20 mass% or more relative to the mass of the PBT composite material. On the other hand, while also depending on the kind of the solvent to be added, when the amount of the solvent to be added is too large, there is a concern that PBT may be precipitated, and the amount of the solvent to be added used is thus preferably 2000 mass% or less and more preferably 1500 mass% or less relative to the mass of the PBT composite material. The amount of the solvent to be added used can be set to, for example, 10 mass% to 2000 mass% or 20 mass% to 1500 mass% relative to the mass of the PBT composite material.

[Step (X)]

In the PBT composite material, there is a component colored with a pigment, such as carbon black. Removal of a colorant is not essential for materials that users do not see because the materials are used in devices or the like; however, in the case of using a recycled PBT to produce a product for which designability or the like is important, it is preferable to remove a colorant or the like in producing a recycled product. However, it is not easy to sufficiently remove a colorant only by performing the step (A) to the step (D). This is because the particle size of a coloring component, such as a pigment, is small, and it is difficult to capture an impurity by filtration or the like in the step (B). Therefore, in order to improve the removal efficiency of a colorant, such as a pigment, it is preferable to perform a step (X) of bringing the PBT solution and an aggregating agent and/or a filter aid into contact with each other before the step (B). When the PBT solution and a filter aid and/or an aggregating agent are brought into contact with each other, and the coloring components, such as the pigment, are adsorbed or aggregated together before the step (B), it is possible to achieve a state where an impurity is easy to capture by filtration or the like.

The step (X) is a step of performing at least one of a step (X1) of brining the PBT solution and an aggregating agent into contact with each other before the step (B) and a step (X2) of brining the PBT solution and a filter aid into contact with each other before the step (B), and it is preferable to perform the step (X1) and the step (X2).

A method for bringing the PBT solution and the aggregating agent and/or the filter aid into contact with each other is not particularly limited as long as the aggregating agent and/or the filter aid and the PBT solution come into contact with each other, and examples thereof include a method involving preparing a PBT solution in the step (A) and then adding and mixing a filter aid and/or an aggregating agent into a reactor containing the PBT solution, a method involving packing a column with a filter aid and circulating the PBT solution therein, a method involving adding and mixing a filter aid and/or an aggregating agent during the preparation of the PBT solution in the step (A), and the like. These methods may be combined together.

Examples of the filter aid include activated carbon, activated clay, bentonite, celite, alumina, silica gel, zeolite, a synthetic adsorbent, and the like. In a case where the amount of the filter aid added in the case of being mixed into the reactor is small, since the adsorption of a pigment or the like does not sufficiently progress, the amount of the filter aid added is preferably 5 mass% or more, more preferably 15 mass% or more, and still more preferably 25 mass% or more relative to the mass of the PBT composite material. In a case where the amount added is small, adsorption does not sufficiently progress. On the other hand, when the amount of the filter aid added is large, for example, in a case where filtration is performed in the step (B), since there is a possibility that the filter aid may leak, the amount of the filter aid added is preferably 500 mass% or less and more preferably 250 mass% or less relative to the mass of the PBT composite material. The amount of the filter aid relative to the PBT composite material can be set to, for example, 5 mass% to 500 mass%, 15 mass% to 500 mass%, or 25 mass% to 250 mass%.

Regarding the lower limit value of the amount of the aggregating agent added in the case of being used, since there is a sufficient effect at a small amount, the amount of the aggregating agent added is preferably 0.1 mass% or more and more preferably 0.5 mass% or more relative to the mass of the PBT composite material. On the other hand, when the amount of the aggregating agent added is too large, since an impurity derived from the aggregating agent remains in the PBT solution, and there is a concern that the color tone and mechanical strength of a final recycled PBT may deteriorate, the amount of the aggregating agent added is preferably 20 mass% or less and more preferably 10 mass% or less relative to the mass of the PBT composite material. The amount of the aggregating agent relative to the PBT composite material can be set to, for example, 0.1 mass% to 20 mass% or 0.5 mass% to 10 mass%.

The aggregating agent neutralizes the charges of impurities, such as the pigment, dispersed in the PBT solution, thereby promoting the adsorption and aggregation of the impurities and enabling the impurities to be enlarged up to a particle size at which the impurities can be captured in the step (B). Examples of aggregating agents that can be used include one or more selected from the group consisting of inorganic salts other than alkali metal salts and alkaline earth metal salts and polymer compounds that dissolve PBT. Examples of the inorganic salts other than alkali metal salts and alkaline earth metal salts include iron (III) chloride, iron (II) sulfate, iron (III) sulfate, aluminum chloride, aluminum sulfate, titanium oxide, copper (I) sulfate, copper (II) sulfate, copper (I) chloride, copper (II) chloride, zinc sulfate, and the like, and one or more selected from the group consisting of iron (III) chloride, iron (II) sulfate, iron (III) sulfate, aluminum sulfate, and aluminum chloride are preferable. In addition, a mixture of inorganic salts that are commercially available as aggregating agents may also be used. Particularly, in the case of promoting the adsorption and aggregation of a pigment, such as carbon black, having a small particle size, the adsorption and aggregation are easy to promote when inorganic salts having relatively close molecular sizes are used.

The inorganic salts are capable of neutralizing charges; however, in a case where the particle sizes of aggregated particles are small, a polymer compound, such as an anionic polymer compound, a cationic polymer compound, or a nonionic polymer compound, may be added. That is, the PBT solution is preferably brought into contact with an aggregating agent composed of an inorganic salt other than alkali metal salts and alkaline earth metal salts and then brought into contact with an aggregating agent composed of a polymer compound. Particles dispersed in the PBT solution adhere to polymer chains, and the particle sizes can be enlarged. What has been described above shows that in a case where there is a need to remove an impurity having a relatively small particle size, such as a pigment, when an inorganic salt is added first, and a polymer aggregating agent is then added, it is possible to effectively enlarge the impurity up to a particle size at which the impurity can be captured in the step (B). Typical examples of the polymer compound include polyacrylamide, polyethylene oxide, and the like.

As described above, it is preferable to use the filter aid and the aggregating agent in combination. In the case of using the filter aid and the aggregating agent in combination, the PBT solution may be treated with the filter aid and then treated with the aggregating agent, the PBT solution may be treated with the aggregating agent and then treated with the filter aid, or the PBT solution may be treated with the filter aid and the aggregating agent at the same time. In addition, the method for bringing the PBT solution and the filter aid into contact with each other and the method for bringing the PBT solution and the aggregating agent into contact with each other may be different methods.

Regarding the contact time, when the time is too short, since adsorption or aggregation does not sufficiently progress, the contact time is preferably 20 minutes or longer and more preferably 30 minutes or longer. On the other hand, when the time is too long, since the impurity is eluted from the added filter aid or aggregating agent, the contact time is preferably 180 minutes or shorter and more preferably 120 minutes or shorter. The contact time can be set to, for example, 20 minutes to 180 minutes or 30 minutes to 120 minutes.

[Step (B)]

The step (B) is a step of removing an insoluble matter from the PBT solution to obtain a liquid component (L) containing PBT dissolved therein. When the PBT solution obtained in the step (A) or the step (X) is filtered or the like, it is possible to remove a large amount of an insoluble matter in the PBT solution. Regarding this removal of an impurity, it may not be possible to completely remove the insoluble matter at all times as long as there is no problem with the use of an obtained recycled PBT. For example, in a case where an obtained recycled PBT is intended to be used as a member in a device as described above, the coloring of the recycled PBT is allowed. Therefore, in a case where the PBT solution contains a colorant, there is no problem even when it is not possible to completely remove the colorant, and the colorant may remain.

As a method for removing the insoluble matter from the PBT solution, any of filter paper, centrifugation, cyclone filtration, a glass filter, a bag filter, a candle filter, or the like may be used, and these may be combined together. In addition, the filter may be used in a plurality of stages or in a plurality of methods. The smallest opening size of a filter medium is preferably 10 $\mu$m or less, more preferably 5 $\mu$m or less, and still more preferably 1 $\mu$m or less. In a case where the opening size is too large, the removal of a foreign matter becomes insufficient, and when the opening size is too small, there is a tendency that the filterability becomes poor. In addition, the temperature during the filtration is preferably within a range of 10°C to 120°C. When the temperature is too low, the solution becomes more viscous, and a large load is applied to the filtration, and when the temperature is too high, there is a concern that deterioration of PBT may be caused.

[Step (C)]

The step (C) is a step of mixing the liquid component (L) and a solvent (P) capable of precipitating polybutylene terephthalate by being mixed with the liquid component (L) to precipitate PBT, thereby obtaining a slurry, and then separating the slurry into solid and liquid to obtain a solid PBT.

(Solvent (P))

The solvent (P) that can be used to precipitate PBT is not particularly limited as long as the solvent (P) is capable of precipitating PBT by being mixed with the liquid component (L), but is preferably one or more selected from the group consisting of an aromatic hydrocarbon-based solvent, an aliphatic hydrocarbon-based solvents, a ketone-based solvent, an aldehyde-based solvent, an alcohol-based solvent, an ether-based solvent, and water. Examples of the solvent (P) include aromatic hydrocarbon-based solvents such as toluene; aliphatic hydrocarbon-based solvents such as hexane, heptane, octane, hexene, heptene, octene, cyclopentane, cyclohexane, cycloheptane, cyclohexene, and cycloheptene; ketone-based solvents such as acetone, methyl ethyl ketone, pentanone, hexanone, diethyl ketone, methyl isobutyl ketone, 3-penten-2-one, cyclopropanone, cyclobutanone, and dimethylacetophenone; aldehyde-based solvents such as propionaldehyde, butylaldehyde, pentanal, hexanal, vinyl aldehyde, glyoxal, isobutyraldehyde, and succinaldehyde; alcohol-based solvents such as methanol, ethanol, propanol, isopropanol, isobutyl alcohol, and tert-butyl alcohol; ether-based solvents such as diethyl ether, 1,4-dioxane, tetrahydrofuran, isopropyl methyl ether, methyl propyl ether, furan, cyclopentyl methyl ether, ethyl isopropyl ether, and tert-butyl propyl ether; water; and the like. Only one of these solvents may be used or two or more thereof may be used. Among them, one or more selected from the group consisting of acetone, toluene, methanol, ethanol, isopropyl alcohol, and water is preferably used as the solvent (P).

The amount of the solvent (P) used may be an amount at which PBT can be precipitated, but is preferably 200 mass% or more, more preferably 300 mass% or more, and still more preferably 400 mass% or more relative to the mass of the PBT composite material. In a case where the rate of the solvent (P) is small, there is a case where precipitation does not sufficiently occur or fluidity becomes low in the subsequent solid-liquid separation. In addition, the amount of the solvent (P) used is preferably 5000 mass% or less, more preferably 4000 mass% or less, and still more preferably 3000 mass% or less relative to the mass of the PBT composite material. In a case where the rate of the solvent (P) is large, PBT also dissolves in the solvent (P) depending on the conditions, and there is a concern that the yield may deteriorate in the end. The amount of the solvent (P) used can be set to, for example, 200 mass% to 5000 mass%, 300 mass% to 3000 mass%, or 400 mass% to 4000 mass% relative to the mass of the PBT composite material.

In the step (C), the operation of obtaining a slurry (precipitation operation) is preferably performed by controlling the temperature (the temperature of a liquid mixture of the liquid component (L) and the solvent (P)). In the case of not controlling the temperature, the precipitation time becomes nonuniform, and there is a case where PBT is not sufficiently precipitated and the yield decreases at the time of sending the solution to the next step. The temperature during the precipitation operation is preferably equal to or lower than the boiling points of the solvent (S) and the solvent (P). When the temperature is set to be higher than the boiling points of the solvent (S) and the solvent (P), the PBT solubility increases, and the collection of a sufficient amount of PBT becomes difficult. A specific temperature during the precipitation operation is preferably 0°C or higher, more preferably 5°C or higher, and still more preferably 10°C or higher. In a case where the temperature is too low, there is a case where a long time is taken to send the solution at the time of sending the solution to the next step or a large load is applied to filtration at the time of the filtration. In addition, the upper limit is preferably 80°C or lower, more preferably 60°C or lower, and still more preferably 50°C or lower. In a case where the temperature is too high, there is a concern that PBT may deteriorate due to heat. The specific temperature during the precipitation operation can be set to, for example, 0°C to 80°C, 5°C to 60°C, or 10°C to 50°C.

In the step (C), normally, the liquid component (L) and the solvent (P) are mixed together, and a liquid mixture is then stirred for a predetermined time, whereby PBT is sufficiently precipitated to obtain a slurry. PBT that is precipitated is normally a PBT crystal having a crystallized structure at least in part. A method for mixing the liquid component (L) and the solvent (P) is not particularly limited, and the solvent (P) may be supplied to the liquid component (L), or the liquid component (L) may be supplied to the solvent (P). From the viewpoint of enabling the slow precipitation of PBT and making it difficult to take an impurity in PBT, a method in which the solvent (P) is supplied to the liquid component (L) is preferable, and a method in which the solvent (P) is supplied to the liquid component (L) by dropwise addition is more preferable. In the case of supplying two or more solvents (P) to the liquid component (L), the two or more solvents (P) may be mixed together and supplied or may be each supplied.

Since the ratio of solid (PBT) to liquid increases along with the precipitation of PBT, the stirring efficiency tends to decrease. In order to suppress such a decrease in the stirring efficiency along with the precipitation of PBT, the liquid component (L) and the solvent (P) are preferably mixed together while the temperature is controlled and more preferably mixed together by dropwise addition while the temperature is controlled so that PBT is slowly precipitated and PBT does not become massive.

The operation of precipitating PBT may be performed at a constant temperature, but it is preferable that the liquid component (L) and the solvent (P) are mixed together, the mixture is then cooled to a temperature lower than the temperature during the mixing, and PBT is further precipitated. In this case, in order to slowly precipitate PBT, it is preferable to mix the liquid component (L) and the solvent (P) after the temperature of the liquid in a reaction container in which the step (C) is performed is made to be higher than 20°C and 80°C or lower. In the case of supplying the liquid component (L) to the solvent (P), the temperature of the solvent (P) is preferably higher than 20°C and more preferably 30°C or higher while also depending on the boiling point of the solvent (P) or the liquid component (L). In addition, in the case of supplying the solvent (P) to the liquid component (L), the temperature of the liquid component (L) is preferably higher than 20°C and 80°C or lower and preferably 30°C or higher and 60°C or lower while also depending on the boiling point of the solvent (P) or the liquid component (L).

The supply speed can be set as appropriate in a range of not exceeding the above-described temperature depending on the size of the reaction container, the amount of the liquid, or the like, but is preferably set to a speed at which the full amount can be supplied within four hours. In addition, when the supply speed is too fast, crystal growth abruptly progresses, and an impurity is easy to be taken in. Therefore, the supply speed is preferably set to a speed at which the full amount can be supplied for 0.25 hours or longer. That is, the supply time is preferably 0.25 to three hours and more preferably 0.5 to 1.5 hours. The supply time refers to a time necessary to supply the full amount of the liquid component (L) in the case of supplying the liquid component (L) to the solvent (P) and refers to a time necessary to supply the full amount of the solvent (P) in the case of supplying the solvent (P) to the liquid component (L).

In the step (C), it is preferable that after the liquid component (L) and the solvent (P) are mixed together, the liquid mixture is cooled to a predetermined maturing temperature of 20°C or lower, and the maturing temperature is then maintained to precipitate PBT. The maturing temperature is preferably 20°C or lower and more preferably 15°C or lower. In addition, the lower limit is preferably 0°C or higher and more preferably 5°C or higher. The cooling speed is preferably 5 °C/minute or slower, preferably 3 °C/minute or slower, and still more preferably 1 °C/minute or slower. When the time during which the maturing temperature is maintained (maturing time) is too short, since PBT is not sufficiently precipitated, and there is a possibility that the yield of a recycled PBT may be decreased, the time is preferably 0.5 hours or longer and more preferably 1.5 hours or longer. In addition, after a certain time, an increase in the amount of PBT precipitated is small, and the upper limit of the maturing time is thus normally three hours or shorter.

(Separation of PBT)

In the step (C), after a slurry in which PBT has been precipitated is obtained, the slurry is separated into solid and liquid, and a solid PBT is collected. The slurry can be separated into solid and liquid by a known method, such as filtration or centrifugation, and filtration is preferable. For the filtration, any of filter paper, centrifugal filtration, cyclone filtration, a glass filter, a bag filter, a candle filter, or the like may be used. In addition, the filter may be used in a plurality of stages or in a plurality of methods. In a case where the opening size of a filter medium is too large, the removal of a foreign matter becomes insufficient, and when the opening size is too small, there is a tendency that the filterability becomes poor. Therefore, the smallest opening size of the filter medium is preferably 15 $\mu$m or less, more preferably 10 $\mu$m or less, and still more preferably 5 $\mu$m or less. In addition, the smallest opening size of the filter medium is preferably 1 $\mu$m or more and more preferably 3 $\mu$m or more.

(Washing of PBT)

The solid PBT collected by solid-liquid separation may be dried in the step (D) as it is, but there is a possibility that an impurity may adhere to the surface of PBT, and it is thus preferable to further wash PBT and dry PBT in the step (D). Therefore, a step of further washing the solid PBT may be performed after the step (C). Specifically, the solid PBT collected by solid-liquid separation and a solvent for post washing are mixed and stirred together, and the solvent for post washing is removed. As a result, the impurity adhering to the surface of PBT is removed.

As the solvent for post washing, it is possible to use solvents that can be used as the solvent (P) in the step (C), and one or more selected from the group consisting of acetone, toluene, methanol, ethanol, isopropyl alcohol, and water are preferably used. The solvent for post washing and the solvent (P) in the step (C) may be the same as or different from each other. Since it is easy to remove the solvent in the step (D), the boiling point of the solvent for post washing is preferably 100°C or lower and more preferably 60°C or lower. The temperature of the solvent for post washing may be set as appropriate depending on the boiling point of the solvent being used or the like, but is preferably 25°C to 80°C. The amount of the solvent for post washing used is preferably 200 mass% or more and more preferably 500 mass% or more relative to the mass of the precipitated PBT. In addition, the washing may be performed a plurality of times. In the case of performing the washing a plurality of times, the kind or temperature of the solvent being used, the amount of the solvent, and the like may be set to the same conditions or may be set to different conditions each time.

<Step (D)>

The step (D) is a step of drying the solid PBT to obtain a recycled PBT. A drying method is not particularly limited, a known method can be used, and the drying method may be vacuum drying or drying at normal pressure. The drying temperature and the drying temperature can be determined as appropriate, and it is possible to dry the solid PBT, for example, at 50°C to 120°C for 2 to 15 hours.

<Recycling of solvent>

In the case of obtaining a recycled PBT on an industrial scale, the solvent used in each step may be separated from the impurity by distillation, collected, and reused. For example, since the liquid separated from PBT by solid-liquid separation in the step (C) contains the solvent (S) or the solvent (P), each solvent is collected by distillation and may be recycled and used in the step (A) or the step (C).

<Recycled PBT>

A recycled PBT obtained by the method for producing a recycled PBT of the present invention is polybutylene terephthalate recycled from the PBT composite material by material recycling. Since the intrinsic viscosity or the MFR value of the recycled PBT is a physical property with no practical problems, molding using the recycled PBT becomes possible.

[Intrinsic viscosity]

Measurement of intrinsic viscosity makes it possible to confirm that a decrease in intrinsic viscosity by the decomposition of PBT or an increase in viscosity by the incorporation of an impurity does not occur due to the method for producing a recycled PBT of the present invention. Generally, the intrinsic viscosity of PBT is preferably 0.5 to 2 dL/g, and it is known that PBT having an intrinsic viscosity within a range of 0.6 to 1.5 dL/g is more preferable from the viewpoint of moldability and mechanical characteristics. When the intrinsic viscosity of the recycled PBT obtained by the method for producing a recycled PBT of the present invention can also be within this range, the recycled PBT can also be used at the time of molding with no practical problems. According to the method for producing a recycled PBT of the present invention, it is possible to obtain a material-recycled PBT having an intrinsic viscosity of 0.6 to 1.5 dL/g.

[Melt flow rate (MFR)]

The melt flow rate (MFR) is a numerical value indicating the fluidity of a thermoplastic resin at the time of being melted. This value serves as an index of fluidity or molecular weight, and as the value is larger, the fluidity is evaluated to be higher, and the molecular weight is evaluated to be lower. Generally, the MFR of a PBT resin at 250°C and 50 kgf/cm$^2$ is preferably 10 to 100 g/10 min, and preferably 10 to 90 g/10 min from the viewpoint of moldability and mechanical characteristics. According to the method for producing a recycled PBT of the present invention, it is possible to obtain a material-recycled PBT having an MFR at 250°C and 50 kgf/cm$^2$ of 10 to 90 g/10 min.

[L value]

In a case where there is a need to dye the obtained recycled PBT with a desired color, the L value of the recycled PBT is preferably 80 or more, more preferably 85 or more, and still more preferably 90 or more.

[Ash content]

Regarding the remaining amount of an inorganic substance in the obtained recycled PBT, the amount of the inorganic substance remaining in the recycled PBT (ash content) can be calculated from the remaining amount of the recycled PBT after the recycled PBT is ashed. The ash content remaining in the recycled PBT is preferably 10 mass% or less, more preferably 5 mass% or less, and still more preferably 1 mass% or less.

<Method for producing PBT composite material>

In addition, the present invention relates to a method for producing a PBT composite material, the method having a step of producing a recycled PBT by the method for producing a recycled PBT of the present invention and a step of producing a PBT composite material using the obtained recycled PBT (hereinafter referred to as "the method for producing a PBT composite material of the present invention" in some cases).

The step of producing a recycled PBT is as described above. The step of producing a PBT composite material can be performed by a known production method except that the recycled PBT is used as a raw material PBT. As a method for producing the PBT composite material, a PBT molded body can be obtained by, for example, an injection molding method, a ultra-high speed injection molding method, an injection compression molding method, a two-color molding method, a gas-assisted or other blow molding method, a molding method using a heat-insulating mold, a molding method using a rapid heating molds, insert molding, an IMC (in-mold coating molding) molding method, an extrusion molding method, or a sheet molding method. This makes it possible to obtain an injection molded body, an extrusion molded body, a sheet, a pipe, a variety of films, and the like. In addition, these may be made of PBT alone or may be molded products made of PBT and a glass fiber or a different resin.

In addition, in the step of producing a PBT composite material, as the raw material PBT, the recycled PBT may be contained, only the recycled PBT may be used, or the recycled PBT and a virgin PBT may be used in combination.

The form of the PBT composite material to be produced is not particularly limited, and it is possible to produce a PBT-containing molded product, a PBT-containing laminated product, or the like by the method for producing a PBT composite material of the present invention.

Examples

Hereinafter, the present invention will be more specifically described with Examples, but the present invention is not limited to Examples below unless the gist of the present invention is changed.

<Analysis methods>

= Measurement of intrinsic viscosity =

0.5 g of an obtained recycled PBT was dissolved in 30 mL of a solvent mixture of phenol and 1,1,2,2-tetgrachloroethane (mass ratio: 1/1). The numbers of seconds taken for the dropping of a polymer solution as a dissolution sample and the solvent mixture alone were measured using a Ubbelohde viscometer at 30°C, and the intrinsic viscosity was calculated from the following formula.

[Formula 1]

$$\text{Intrinsic viscosity} = \frac{\left(1 + 4K_H \eta_{sp}\right)^{0.5} - 1}{2K_H C}$$

Here, $\eta_{sp} = \eta/\eta_0 - 1$, $\eta$ represents the number of seconds taken for the dropping of the polymer solution, $\eta_0$ represents the number of seconds taken for the dropping of the solvent mixture alone. C represents the concentration [g/dL] of the polymer solution. $K_H$ is the Huggins constant, and 0.33 was employed as $K_H$.

= Measurement of melt flow rate (MFR) =

The MFR of the obtained recycled PBT was measured under conditions of 250°C and 50 kgf/cm$^2$ using a Koka type flow tester.

= Measurement of melting point (Tm) =

The temperature of 8 mg of a sample of the obtained recycled PBT was raised from 30°C to 300°C at a speed of 10 °C/min using DSC ("DSC200" manufactured by Hitachi High-Tech Analytical Science), and the melting point (Tm) of the recycled PBT was measured. In addition, in order to confirm that PBT was not decomposed due to the method of the present invention or whether or not a different resin was present, the fact that the melting point peak of PBT was divided and separated into two part or did not become broad and the fact that other peaks were not present were confirmed. No abnormality in the peak observed was evaluated as "absent," and abnormality in the peak observed was evaluated as "present."

= Measurement of ash content =

Sulfuric acid was added to the recycled PBT, a white smoke treatment was performed thereon on a hot plate, and then the recycled PBT was dry-ashed at 650°C with an electric furnace ("Muffle Furnace FP410" manufactured by Yamato Co., Ltd.). The weight thereof was measured, and the weights before and after the treatment were compared with each other, thereby calculating the ash content.

= Confirmation of presence or absence of incorporation of different resin =

A raw material B, which will be described below, contained an AS resin, and a raw material C contained HIPS (high impact polystyrene) resin. 20 mg of a sample of the obtained recycled PBT was dissolved in 1 mL of 1,1,1,3,3,3-hexafluoro-2-propanol (HFIP). Since HIPS in the raw material C does not dissolve in HFIP, filtration was performed, and the residual rate was confirmed from the weight of a residue. Since the AS resin in the raw material B dissolves in HFIP, after dissolution filtration, 1 mL of deuterated chloroform was added thereto, and the remaining of the AS resin was confirmed by 1H-NMR and evaluated as follows.

Absent: The residual rate is 0.1% or less (equal to or less than the lower limit of quantitation).
Slightly remain: The residual rate is 0.5% or less.
Present: The residual rate is 10 or more.

= Measurement of color tone =

The L value of the recycled PBT was measured using a color difference meter ("ZE-6000" manufactured by Nippon Denshoku Industries Co., Ltd.).

= Measurement of remaining amount of phenol =

The obtained recycled PBT was immersed in acetonitrile for 24 hours, phenol was extracted into the acetonitrile, and the amount of the phenol was then measured by high-performance liquid chromatography ("Waters e2695" manufactured by Waters Corporation).

<PBT composite materials (raw materials)>

The following raw material A to raw material C were used.

Raw material A: A polybutylene terephthalate resin containing 300 of a glass fiber (GF) (containing carbon black (CB)) (process scrap)
Raw material B: A polybutylene terephthalate/AS resin containing 30% of GF (process scrap from a sprue runner)
Raw material C: A polybutylene terephthalate/HIPS resin containing 30% of GF (process scrap from a sprue runner)

The raw materials were granulated to a 0.5 cm × 0.5 cm size with a granulator in advance.

[Example 1]

(Step (A))

100 g (100 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (B))

The PBT solution obtained in the step (A) was filtered using filter paper having a pore diameter of 0.5 μm, thereby removing an impurity and obtaining a filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue (wet cake) obtained in the step (C) was dried under reduced pressure at 80°C using an evaporator, and a recycled PBT was obtained.

On the obtained recycled PBT, each evaluation was performed by the above-described procedure. The result of each evaluation is shown in Table 1.

[Example 2]

Example 2 was performed in the same manner as in Example 1 except that the solvent (P) in the step (C) was changed to isopropyl alcohol. The result of each evaluation is shown in Table 1.

[Example 3]

Example 3 was performed in the same manner as in Example 1 except that the solvent (P) in the step (C) was changed to water. The result of each evaluation is shown in Table 1.

[Example 4]

Example 4 was performed in the same manner as in Example 1 except that the solvent (P) in the step (C) was changed to methanol. The result of each evaluation is shown in Table 1.

[Example 5]

Example 5 was performed in the same manner as in Example 1 except that the solvent (S) in the step (A) was changed from phenol to cresol. The result of each evaluation is shown in Table 1.

[Example 6]

(Step (A))

300 g (1000 mass% relative to the raw material A) of a solvent mixture of phenol and toluene (mass ratio = 1:1) was added as a solvent (S) to a 1 L separable flask, 30 g of the shredded raw material A was added thereto, and the mixture was heated at 80°C for one hour while being stirred under a nitrogen atmosphere, thereby obtaining a PBT solution.

(Step (B))

The PBT solution obtained in the step (A) was filtered using filter paper having a pore diameter of 0.5 $\mu$m, thereby removing an impurity and obtaining a filtrate (liquid component (L)) containing PBT dissolved therein.

(Step (C))

While the temperature of the filtrate obtained in the step (B) was held at 50°C, 300 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 10°C for one hour. This was filtered using filter paper having a pore diameter of 7 $\mu$m, and a residue (PBT) was collected.

(Step (D))

The residue obtained in the step (C) was dried under reduced pressure at 80°C using an evaporator, and a recycled PBT was obtained. The result of each evaluation is shown in Table 1.

[Example 7]

Example 7 was performed by the same procedure as in Example 1 except that the PBT composite material was changed to the raw material B. The result of each evaluation is shown in Table 2.

[Example 8]

Example 8 was performed by the same procedure as in Example 1 except that the PBT composite material was changed to the raw material C. The result of each evaluation is shown in Table 2.

[Example 9]

Example 9 was performed by the same procedure as in Example 1 except that the PBT composite material was changed to the raw material B, and the solvent (S) in the step (A) was changed to phenol:toluene = 4:6 (mass ratio). The result of each evaluation is shown in Table 2.

[Example 10]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

2.5 g of activated carbon (powder/sawdust) was added to the PBT solution obtained in the step (A), and the mixture was stirred for 30 minutes.

(Step (B))

The PBT solution after the step (X) was filtered using filter paper having a pore diameter of 0.5 $\mu$m, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 $\mu$m, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 11]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X) and Step (B))

2.5 g of activated carbon (powder/sawdust) was added to the PBT solution obtained in the step (A), and the mixture was stirred for 30 minutes.
Next, the PBT solution was filtered using filter paper having a pore diameter of 0.5 $\mu$m with 2.5 g of celite placed, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 12]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

0.5 g of iron (II) sulfate was added to the PBT solution obtained in the step (A), and the mixture was stirred for 60 minutes.

(Step (B))

The PBT solution after the step (X) was filtered using filter paper having a pore diameter of 0.5 μm, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 13]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

0.1 g of iron (III) chloride was added to the PBT solution obtained in the step (A), and the mixture was stirred for 60 minutes.

(Step (B))

The PBT solution after the step (X) was filtered using filter paper having a pore diameter of 0.5 μm, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 14]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

1 g of aluminum sulfate was added to the PBT solution obtained in the step (A), and the mixture was stirred for 60 minutes.

(Step (B))

The PBT solution after the step (X) was filtered using filter paper having a pore diameter of 0.5 μm, thereby removing an impurity and obtaining a clear filtrate containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 15]

(Step (A))

100 g (1000 mass% relative to the raw material A) of phenol was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

0.3 g of activated carbon (powder/sawdust) was added to the PBT solution obtained in the step (A), the mixture was then stirred for 30 minutes, 0.3 g of iron (III) sulfate was added thereto, and the mixture was stirred for 60 minutes.

(Step (B))

The PBT solution after the step (X) was filtered using filter paper having a pore diameter of 0.5 μm, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Example 16]

(Step (A))

100 g (1000 mass% relative to the raw material A) of a solvent mixture of phenol and toluene (mass ratio = 1:1) was added as a solvent (S) to a 500 mL flask, 10 g of the granulated raw material A was added thereto, and the mixture was heated at 80°C for one hour while being stirred under a nitrogen atmosphere, thereby obtaining a PBT solution.

(Step (X))

0.1 g of activated carbon (powder/sawdust) was added to the PBT solution obtained in the step (A), the mixture was then stirred for 30 minutes, 0.1 g of iron (II) sulfate was added thereto, and the mixture was stirred for 60 minutes.

(Step (B))

The PBT solution after the step (X) was filtered using filter paper having a pore diameter of 0.5 μm, thereby removing an impurity and obtaining a clear filtrate (liquid component (L)) containing PBT dissolved therein.

(Step (C))

While the temperature of the filtrate obtained in the step (B) was held at 50°C, 100 g (1000 mass% relative to the raw material A) of acetone was added dropwise to the filtrate little by little as a solvent (P) to prevent the temperature from exceeding the control temperature of 50°C, and PBT was precipitated. After the full amount of acetone was added thereto, the temperature was decreased to 20°C over 30 minutes, and the filtrate was stirred at 20°C for one hour. This was filtered using filter paper having a pore diameter of 7 μm, and a residue (PBT) was collected.

(Step (D))

The residue obtained in the step (C) was dried under reduced pressure at 80°C using an evaporator, and a recycled PBT was obtained. The result of each evaluation is shown in Table 3.

[Reference Example]

The intrinsic viscosities, the MFRs, and the Tm's were measured using "NOVADURAN (registered trademark) 5020" manufactured by Mitsubishi Chemical Corporation. The results are shown in Table 1 and Table 2.

[Comparative Example 1]

100 g (1000 mass% relative to the raw material A) of phenol was added to a 500 mL flask, 10 g of the granulated raw material A was added thereto, and the mixture was heated at 80°C for one hour while being stirred under a nitrogen atmosphere to obtain a PBT solution. The obtained PBT solution was subjected to gradual distillation of phenol under reduced pressure at 120°C to dryness. The results thereof are shown in Table 4.

[Comparative Example 2]

Comparative Example 2 was performed in the same manner as in Comparative Example 1 except that the raw material was changed to the raw material B. The results thereof are shown in Table 4.

[Comparative Example 3]

Comparative Example 3 was performed in the same manner as in Comparative Example 1 except that the raw material was changed to the raw material C. The results thereof are shown in Table 4.

[Comparative Example 4]

100 g (1000 mass% relative to the raw material A) of 1,4-butanediol was added to a 500 mL flask, 10 g of the granulated raw material A was added thereto, and the mixture was heated at 120°C while being stirred under a nitrogen atmosphere, but the mixture did not dissolve.

[Comparative Example 5]

100 g (1000 mass% relative to the raw material A) of 1,4-butanediol was added to a 500 mL flask, 10 g of the granulated raw material A was added thereto, furthermore, 0.1 g of sodium hydroxide was added thereto, and the mixture was heated at 80°C while being stirred under a nitrogen atmosphere and thereby dissolved. Next, the mixture was filtered using filter paper having a pore diameter of 0.5 $\mu$m to obtain a filtrate. 100 g (1000 mass% relative to the raw material A) of acetone was added dropwise to an obtained filtrate little by little, but no crystals were precipitated. This is considered to be because PBT decomposed due to the addition of sodium hydroxide.

[Comparative Example 6]

The raw material A was melt-extruded using a 15 mm bent type twin-screw extruder (manufactured by Technovel Corporation, twin-screw extruder "KZW") having a screen mesh with 50 meshes mounted on a break plate at a temperature of 260°C to remove an impurity, such as a glass fiber. The screen mesh was clogged, the extruder was often stopped, and the screen mesh was exchanged to acquire PBT. The results thereof are shown in Table 4.
Table 1 shows the results of Example 1 to Example 6 in which the raw material A was used, and a variety of solvents were studied. It can be read that when PBT is dissolved in the solvent (S) containing a phenolic solvent and then brought into contact with the solvent (P) in which PBT is insoluble, it is possible to obtain a recycled PBT having a quality with no practical problems without decomposing PBT.

[Table 1]

| | | Example 1 | Example 2 | Example 3 | Example 4 | Example 5 | Example 6 | Reference Example |
|---|---|---|---|---|---|---|---|---|
| Raw material (PBT composite material) | | A | A | A | A | A | A | Virgin PBT |
| Solvent (S) | | Phenol | Phenol | Phenol | Phenol | Cresol | Phenol/toluene | - |
| Solvent (P) | | Acetone | Isopropyl alcohol | Water | Methanol | Acetone | Acetone | - |
| Collection rate relative to charged amount | [wt.%] | 58 | 60 | 64 | 66 | 61 | 66 | - |

(continued)

|  |  | Example 1 | Example 2 | Example 3 | Example 4 | Example 5 | Example 6 | Reference Example |
|---|---|---|---|---|---|---|---|---|
| Collection rate relative to theoretical PBT | [wt.%] | 71 | 86 | 91 | 94 | 87 | 95 | - |
| Intrinsic viscosity | [dl/g] | 0.82 | 0.83 | 0.85 | 0.82 | 0.83 | 0.84 | 1.17 |
| MFR | [g/10min] | 70 | 71 | 73 | 69 | 70 | 72 | 14 |
| Tm | [°C] | 224 | 224 | 225 | 224 | 225 | 224 | 224 |
| Remaining amount of phenol | [ppm] | 2520 | - | - | - | - | 280 | - |
| Ash content | [wt.%] | 0.3 | 2.3 | 1.1 | 0.6 | 1.5 | 0.7 | 0.2 |
| Abnormality of peak in melting point measurement | | Absent | Absent | Absent | Absent | Absent | Absent | Absent |

Table 2 shows the results of Example 7 to Example 9 in which a raw material into which a different resin had been incorporated was used. It can be read that even with a sample into which a different resin has been incorporated, it is possible to obtain a recycled PBT having a quality with no practical problems without decomposing PBT and without containing a resin other than PBT.

[Table 2]

|  |  | Example 7 | Example 8 | Example 9 | Reference Example |
|---|---|---|---|---|---|
| Raw material (PBT composite material) | | B | C | B | Virgin PBT |
| Solvent (S) | | Phenol | Phenol | Phenol/toluene | - |
| Solvent (P) | | Acetone | Acetone | Acetone | - |
| Intrinsic viscosity | [dl/g] | 0.74 | 0.89 | 0.75 | 1.17 |
| MFR | [g/10min] | 81 | 60 | 80 | 14 |
| Tm | [°C] | 224 | 225 | 224 | 224 |
| Ash content | [wt.%] | 0.5 | 1.2 | 0.4 | 0.2 |
| Abnormality of peak in melting point measurement | | Absent | Absent | Absent | Absent |
| Incorporation of different resin | | Absent | Absent | Absent | Absent |

Table 3 shows the results of Example 10 to Example 16. It can be read that when a filter aid or an aggregating agent is added, it is possible to make the color tone of a recycled PBT obtained from a PBT resin colored black favorable.

[Table 3]

|  | Example 10 | Example 11 | Example 12 | Example 13 | Example 14 | Example 15 | Example 16 |
|---|---|---|---|---|---|---|---|
| Raw material (PBT composite material) | A | A | A | A | A | A | A |
| Solvent (S) | Phenol | Phenol | Phenol | Phenol | Phenol | Phenol | Phenol/toluene |
| Solvent (P) | Acetone | Acetone | Acetone | Acetone | Acetone | Acetone | Acetone |

(continued)

| | | Example 10 | Example 11 | Example 12 | Example 13 | Example 14 | Example 15 | Example 16 |
|---|---|---|---|---|---|---|---|---|
| Aggregating agent | | - | - | Iron (II) sulfate | Iron (III) chloride | Aluminum sulfate | Iron (III) sulfate | Iron (II) sulfate |
| Amount of aggregating agent added relative to mass of raw material | [mass%] | - | - | 5 | 1 | 10 | 3 | 1 |
| Filter aid (1) | | Activated carbon | Activated carbon | - | - | - | Activated carbon | Activated carbon |
| Amount of filter aid (1) added relative to mass of raw material | [mass%] | 25 | 25 | - | - | - | 3 | 1 |
| Filter aid (2) | | - | Celite | - | - | - | - | - |
| Amount of filter aid (2) added relative to mass of raw material | [mass%] | - | 25 | - | - | - | - | - |
| Collection rate relative to charged amount | [wt.%] | 61 | 58 | 62 | 63 | 56 | 62 | 63 |
| Collection rate relative to theoretical PBT | [wt.%] | 87 | 82 | 89 | 90 | 80 | 89 | 90 |
| L value | - | 91 | 93 | 92 | 95 | 90 | 95 | 96 |
| b value | - | 2.6 | 2.3 | 2.1 | 2.2 | 2.9 | 2.3 | 1.4 |
| Tm | [°C] | 224 | 224 | 224 | 224 | 224 | 224 | 225 |
| Remaining amount of phenol | [ppm] | - | - | - | - | - | 830 | 30 |
| Abnormality of peak in melting point measurement | | Absent | Absent | Absent | Absent | Absent | Absent | Absent |

Table 4 shows the results of Comparative Examples. It can be read that in the collection of PBT by distilling the solvent (S) away, an inorganic substance, such as a strengthener such as a glass fiber, cannot be removed, and the inorganic substance does not dissolve in a solvent that is generally used in chemical recycling, but dissolves when an alkali is added thereto, and in material recycling by melt extrusion, not only can an impurity be sufficiently removed, but the physical properties also deteriorate due to thermal deterioration.

[Table 4]

| | | Comparative Example 1 | Comparative Example 2 | Comparative Example 3 | Comparative Example 4 | Comparative Example 5 | Comparative Example 6 |
|---|---|---|---|---|---|---|---|
| Raw material (PBT composite material) | | A | B | C | A | A | A |
| Solvent (S) | | Phenol | Phenol | Phenol | 1,4-Butane-diol | 1,4-Butane-diol | - |
| Solvent (P) | | - | - | - | - | Acetone | - |
| Intrinsic viscosity | [dl/g] | 0.48 | 0.52 | 0.49 | - | - | 0.32 |
| MFR | [g/10min] | 105 | 112 | 103 | - | - | 125 |
| Tm | [°C] | 224 | 225 | 224 | - | - | 224 |
| Ash content | [wt.%] | 32 | 28 | 35 | - | - | 12 |
| Abnormality of peak in melting point measurement | | Absent | Present | Present | - | - | Present |
| Incorporation of different resin | | Absent | Present | Present | - | - | Absent |
| Comment | | - | - | - | PBT not decomposed | PBT decomposed | Melting point peak divided |

Based on what has been described above, a recycled BT having a quality with no practical problems can be obtained by the method for producing a recycled PBT of the present invention, and a PBT composite material can be produced from the obtained recycled PBT.

**Claims**

1. A method for producing a recycled polybutylene terephthalate from a polybutylene terephthalate composite material, the method comprising the following step (A) to step (D):

   step (A): a step of dissolving a polybutylene terephthalate composite material in a solvent (S) containing a phenolic solvent to obtain a solution containing polybutylene terephthalate dissolved therein;
   step (B): a step of removing an insoluble matter from the solution containing polybutylene terephthalate dissolved therein to obtain a liquid component (L) containing polybutylene terephthalate dissolved therein;
   step (C): a step of mixing the liquid component (L) and a solvent (P) capable of precipitating polybutylene terephthalate by being mixed with the liquid component (L) to precipitate polybutylene terephthalate, thereby obtaining a slurry, and then separating the slurry into solid and liquid to obtain a solid polybutylene terephthalate; and
   step (D): a step of drying the solid polybutylene terephthalate to obtain a recycled polybutylene terephthalate.

2. The method for producing a recycled polybutylene terephthalate according to claim 1, comprising, before the step (B), a step (X1) of bringing the solution containing polybutylene terephthalate dissolved therein and an aggregating agent into contact with each other.

3. The method for producing a recycled polybutylene terephthalate according to claim 1 or 2, comprising, before the step (B), a step (X2) of bringing the solution containing polybutylene terephthalate dissolved therein and a filter aid into contact with each other.

4. The method for producing a recycled polybutylene terephthalate according to claim 1 or 2, wherein a temperature of the solvent (S) in the step (A) is 45°C or higher and 150°C or lower.

5. The method for producing a recycled polybutylene terephthalate according to claim 1 or 2, wherein in the step (C), the slurry is obtained at 0°C or higher and 80°C or lower.

6. The method for producing a recycled polybutylene terephthalate according to claim 1 or 2, wherein the solvent (P) in the step (C) is one or more selected from the group consisting of an aromatic hydrocarbon-based solvent, an aliphatic hydrocarbon-based solvents, a ketone-based solvent, an aldehyde-based solvent, an alcohol-based solvent, an ether-based solvent, and water.

7. The method for producing a recycled polybutylene terephthalate according to claim 6, wherein the solvent (P) in the step (C) is one or more selected from the group consisting of acetone, toluene, methanol, ethanol, isopropyl alcohol, and water.

8. The method for producing a recycled polybutylene terephthalate according to claim 2, wherein the aggregating agent in the step (X1) is one or more selected from the group consisting of inorganic salts other than alkali metal salts and alkaline earth metal salts and polymer compounds.

9. The method for producing a recycled polybutylene terephthalate according to claim 2, wherein the aggregating agent in the step (X1) is composed of an inorganic salt other than alkali metal salts and alkaline earth metal salts.

10. The method for producing a recycled polybutylene terephthalate according to claim 8 or 9, wherein the inorganic salt other than alkali metal salts and alkaline earth metal salts is one or more selected from the group consisting of iron (III) chloride, iron (II) sulfate, iron (III) sulfate, aluminum sulfate, and aluminum chloride.

11. The method for producing a recycled polybutylene terephthalate according to claim 8, wherein the solution containing polybutylene terephthalate dissolved therein is brought into contact with the aggregating agent composed of the inorganic salt other than alkali metal salts and alkaline earth metal salts, and is then brought into contact with the aggregating agent composed of the polymer compound.

12. The method for producing a recycled polybutylene terephthalate according to claim 8, wherein the polymer compound is one or more selected from the group consisting of polyacrylamide and polyethylene oxide.

13. The method for producing a recycled polybutylene terephthalate according to claim 3, wherein the filter aid in the step (X2) is one or more selected from the group consisting of activated carbon, activated clay, celite, silica gel, a synthetic adsorbent, bentonite, alumina, and zeolite.

14. The method for producing a recycled polybutylene terephthalate according to claim 1 or 2, wherein the solvent (S) contains an aromatic hydrocarbon-based solvent and/or an aliphatic hydrocarbon-based solvent.

15. The method for producing a recycled polybutylene terephthalate according to claim 14, wherein a total content of the aromatic hydrocarbon-based solvent and the aliphatic hydrocarbon-based solvent in the solvent (S) is 20 mass% or more.

16. The method for producing a recycled polybutylene terephthalate according to claim 1 or 2, wherein a content of polybutylene terephthalate in the polybutylene terephthalate composite material is 10 mass% or more.

17. The method for producing a recycled polybutylene terephthalate according to claim 1 or 2, wherein the polybutylene terephthalate composite material contains a further component other than polybutylene terephthalate, and the further component is one or more selected from the group consisting of inorganic compounds, organic low-molecular-weight compounds, fibers other than polybutylene terephthalate, and resins other than polybutylene terephthalate.

18. The method for producing a recycled polybutylene terephthalate according to claim 1 or 2, wherein the polybutylene terephthalate composite material is an injection molded product containing polybutylene terephthalate.

19. The method for producing a recycled polybutylene terephthalate according to claim 1 or 2, wherein the recycled polybutylene terephthalate has an intrinsic viscosity of 0.6 dL/g or higher and 1.5 dL/g or lower.

20. A material-recycled polybutylene terephthalate, having an intrinsic viscosity of 0.6 dL/g or higher and 1.5 dL/g or lower.

**21.** A method for producing a polybutylene terephthalate composite material, comprising:

a step of producing a recycled polybutylene terephthalate by the method for producing a recycled polybutylene terephthalate according to claim 1 or 2; and
a step of producing a polybutylene terephthalate composite material using the obtained recycled polybutylene terephthalate.

## INTERNATIONAL SEARCH REPORT

| International application No. |
| --- |
| **PCT/JP2024/013205** |

**A. CLASSIFICATION OF SUBJECT MATTER**

*C08J 11/08*(2006.01)i; *C08J 3/14*(2006.01)i
FI: C08J11/08 CFD; C08J3/14

According to International Patent Classification (IPC) or to both national classification and IPC

**B. FIELDS SEARCHED**

Minimum documentation searched (classification system followed by classification symbols)

C08J11/08; C08J3/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/040119 A1 (ALADDIN MANUFACTURING CORPORATION) 24 February 2022 (2022-02-24) <br> p. 1, line 22 to p. 11, line 31 | 1, 4-7, 14-21 |
| Y | | 2-3, 8-13 |
| Y | JP 2009-112901 A (MITSUBISHI RAYON CO., LTD.) 28 May 2009 (2009-05-28) <br> paragraphs [0024], [0025] | 2, 8-12 |
| Y | US 2022/0332914 A1 (UOP LLC) 20 October 2022 (2022-10-20) <br> paragraphs [0007], [0013] | 3, 13 |
| A | JP 2007-176969 A (MITSUBISHI CHEMICAL CORPORATION) 12 July 2007 (2007-07-12) <br> paragraph [0059] | 19-20 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **03 June 2024** | **18 June 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/013205**

| Patent document cited in search report | | | Publication date (day/month/year) | Patent family member(s) | | | Publication date (day/month/year) |
|---|---|---|---|---|---|---|---|
| WO | 2022/040119 | A1 | 24 February 2022 | US | 2023/0303799 | A1 | |
| | | | | EP | 4196517 | A1 | |
| | | | | CA | 3187122 | A1 | |
| | | | | CN | 116194808 | A | |
| JP | 2009-112901 | A | 28 May 2009 | (Family: none) | | | |
| US | 2022/0332914 | A1 | 20 October 2022 | WO | 2022/221832 | A1 | |
| | | | | EP | 4323436 | A1 | |
| | | | | CN | 117279986 | A | |
| | | | | KR | 10-2023-0169276 | A | |
| | | | | AU | 2022257112 | A1 | |
| JP | 2007-176969 | A | 12 July 2007 | WO | 2007/074603 | A1 | |
| | | | | CN | 101346430 | A | |

Form PCT/ISA/210 (patent family annex) (July 2022)

# EP 4 692 193 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023075033 A